(19) Europäisches Patentamt / European Patent Office / Office européen des brevets

(11) **EP 3 905 276 A1**

(12) **EUROPEAN PATENT APPLICATION**
published in accordance with Art. 153(4) EPC

(43) Date of publication:
**03.11.2021 Bulletin 2021/44**

(21) Application number: **19905741.5**

(22) Date of filing: **12.09.2019**

(51) Int Cl.:
*H01B 1/06* (2006.01)     *H01B 1/08* (2006.01)
*H01B 13/00* (2006.01)     *H01M 4/62* (2006.01)
*H01M 10/0562* (2010.01)

(86) International application number:
**PCT/JP2019/035795**

(87) International publication number:
**WO 2020/137026 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 26.12.2018 JP 2018243602
26.12.2018 JP 2018243603
26.12.2018 JP 2018243604
26.12.2018 JP 2018243605
28.12.2018 JP 2018248595

(71) Applicant: **Panasonic Intellectual Property
Management Co., Ltd.
Osaka-shi, Osaka 540-6207 (JP)**

(72) Inventors:
• **NAGAMINE Kenta
Chuo-ku, Osaka-shi, Osaka 540-6207 (JP)**
• **SAKAI Akihiro
Chuo-ku, Osaka-shi, Osaka 540-6207 (JP)**

(74) Representative: **Grünecker Patent- und
Rechtsanwälte
PartG mbB
Leopoldstraße 4
80802 München (DE)**

(54) **SOLID ELECTROLYTE MATERIAL AND BATTERY USING SAME**

(57)     The present disclosure provides a solid electrolyte material that can maintain high lithium ion conductivity during the coarse of being formed into fine particles. A solid electrolyte material according to the present disclosure is composed of Li, M, and X. M is at least one element selected from the group consisting of metal elements other than Li and metalloids. X is at least one element selected from the group consisting of F, Cl, Br, and I. Mathematical formula $\text{FWHM}/2\theta_p \leq 0.015$ is satisfied, where FWHM represents a half width of an X-ray diffraction peak in an X-ray diffraction pattern obtained by performing X-ray diffraction measurement on the solid electrolyte material by using Cu-K$\alpha$ radiation, the X-ray diffraction peak having the highest intensity within a range of diffraction angles $2\theta$ greater than or equal to 25° and less than or equal to 35°, and $2\theta_p$ represents a diffraction angle at a center of the X-ray diffraction peak. A value obtained by dividing an average ionic radius of Li and M by an average ionic radius of X is greater than 0.424, and the solid electrolyte material contains a crystal phase assigned to hexagonal crystals.

FIG. 1

**Description**

Technical Field

The present disclosure relates to a solid electrolyte material and a battery using the same.

Background Art

PTL 1 discloses an all-solid battery that uses a sulfide solid electrolyte material.

Citation List

Patent Literature

PTL 1: Japanese Unexamined Patent Application No. 2011-129312

Summary of Invention

Technical Problem

An object of the present disclosure is to provide a solid electrolyte material that can maintain high ion conductivity even when formed into fine particles. Solution to Problem
A solid electrolyte material according to the present disclosure is composed of Li, M, and X,

M is at least one element selected from the group consisting of metal elements other than Li and metalloids, X is at least one element selected from the group consisting of F, Cl, Br, and I, mathematical formula (I) below is satisfied:

$$FWHM/2\theta_p \leq 0.015 \quad (I)$$

wherein,

FWHM represents a half width of an X-ray diffraction peak in an X-ray diffraction pattern obtained by performing X-ray diffraction measurement on the solid electrolyte material by using Cu-K$\alpha$ radiation, the X-ray diffraction peak having the highest intensity within a range of diffraction angles $2\theta$ greater than or equal to 25° and less than or equal to 35°, and
$2\theta_p$ represents a diffraction angle at a center of the X-ray diffraction peak,

a value obtained by dividing an average ionic radius of Li and M by an average ionic radius of X is greater than 0.424, and
the solid electrolyte material contains a crystal phase assigned to hexagonal crystals.

Advantageous Effects of Invention

According to the present disclosure, a solid electrolyte material that can maintain high lithium ion conductivity even when formed into fine particles can be provided.

Brief Description of Drawings

[Fig. 1] Fig. 1 is a cross-sectional view of a battery 1000 according to a second embodiment.
[Fig. 2] Fig. 2 is a schematic view of a pressure forming die 300 used to evaluate the ion conductivity of a solid electrolyte material.
[Fig. 3] Fig. 3 is a graph illustrating an initial discharge characteristic of a battery according to Example 1.
[Fig. 4] Fig. 4 is a graph illustrating X-ray diffraction patterns of solid electrolyte materials according to Example 5A, Example 5B, Comparative Example 4A, and Comparative Example 4B.

Description of Embodiments

Embodiments of the present disclosure will now be described with reference to the drawings.

(First embodiment)

A solid electrolyte material according to a first embodiment is composed of Li, M, and X,

M is at least one element selected from the group consisting of metal elements other than Li and metalloids,
X is at least one element selected from the group consisting of F, Cl, Br, and I,
mathematical formula (I) below is satisfied:

$$FWHM/2\theta_p \leq 0.015 \quad (I)$$

wherein,

FWHM represents a half width of an X-ray diffraction peak in an X-ray diffraction pattern obtained by performing X-ray diffraction measurement on the solid electrolyte material by using Cu-K$\alpha$ radiation, the X-ray diffraction peak having the highest intensity within a range of diffraction angles $2\theta$ greater than or equal to 25° and less than or equal to 35°, and
$2\theta_p$ represents a diffraction angle at a center of the X-ray diffraction peak,

a value obtained by dividing an average ionic radius of Li and M by an average ionic radius of X is greater than 0.424, and
the solid electrolyte material contains a crystal phase assigned to hexagonal crystals.

"Metalloids" are B, Si, Ge, As, Sb, and Te.
"Metal elements" are

(i) All elements included in groups 1 to 12 in the periodic table other than hydrogen, and
(ii) All elements included in groups 13 to 16 in the periodic table other than B, Si, Ge, As, Sb, Te, C, N, P, O, S, and Se.

The solid electrolyte material according to the first embodiment can maintain high lithium ion conductivity even when formed into fine particles. In other words, even when the solid electrolyte material is crushed into fine particles during the process of preparing a battery (for example, an all-solid secondary battery) using the solid electrolyte material according to the first embodiment, the decrease in ion conductivity of the solid electrolyte material can be suppressed. Thus, a battery that has excellent charge/discharge characteristics is obtained.
Since the solid electrolyte material according to the first embodiment does not contain sulfur, hydrogen sulfide does not occur as a result of exposure to air. Thus, the solid electrolyte material according to the first embodiment has high safety.
The "ionic radius" in this disclosure is a value that is based on the definition described in "Shannon et al., Acta A32 (1976) 751.".
The average ionic radius of Li and M contained in the solid electrolyte material according to the first embodiment is calculated on the basis of the following formula:

$$\Sigma(r_C \cdot R_C)/\Sigma R_C$$

Here, $r_C$ represents the ionic radius of Li and the elements contained in M (in other words, cations). $R_C$ represents the amount of substance of Li and the elements contained in M.
The average ionic radius of X contained in the solid electrolyte material according to the first embodiment is calculated on the basis of the following formula:

$$\Sigma(r_A \cdot R_A)/\Sigma R_A$$

Here, $r_A$ represents the ionic radius of the elements (in other words, anions) contained in X. $R_A$ represents the amount of substance of the elements contained in X.

When the value (hereinafter may also be referred to as the "average ionic radius ratio") obtained by dividing the average ionic radius of Li and M by the average ionic radius of X is greater than 0.424, crystal phases assigned to hexagonal crystals deposit. It is considered that since the crystal structure of the crystal phases assigned to hexagonal crystals is maintained even when the material is formed into fine particles, the decrease in ion conductivity is suppressed.

The phrase "crystal phases assigned to hexagonal crystals" used in the present disclosure refers to crystal phases that have a crystal structure similar to $Li_3ErCl_6$ disclosed in ICSD (Inorganic Crystal Structure Database) #01-087-0132 and that have an X-ray diffraction pattern specific to this crystal structure. Thus, the presence of the crystal phases assigned to hexagonal crystals and contained in the solid electrolyte material is determined on the basis of the X-ray diffraction pattern. Here, depending on the type of the elements contained in the solid electrolyte material, the diffraction angle and/or peak intensity ratio of the diffraction pattern can change from that of $Li_3ErCl_6$. Thus, the presence or absence of the "crystal phases assigned to hexagonal crystals" is determined on the basis of not only the diffraction angle of the diffraction peak but also the patterns of at least three diffraction peaks that have high intensities.

The solid electrolyte material according to the first embodiment may contain at least 30 vol% of crystal phases assigned to hexagonal crystals. The solid electrolyte material according to the first embodiment may contain at least 50 vol% of crystal phases assigned to hexagonal crystals. The solid electrolyte material according to the first embodiment may substantially consist of crystal phases assigned to hexagonal crystals. Here, the phrase "the solid electrolyte material according to the first embodiment substantially consists of crystal phases assigned to hexagonal crystals" means that the solid electrolyte material according to the first embodiment contains at least 90 vol% of crystal phases assigned to hexagonal crystals. The solid electrolyte material according to the first embodiment may solely consist of crystal phases assigned to hexagonal crystals.

The solid electrolyte material according to the first embodiment may substantially consist of Li, M, and X. Here, the phrase "the solid electrolyte material according to the first embodiment substantially consists of Li, M, and X" means that, in the solid electrolyte material according to the first embodiment, the molar ratio of the amount of substance of Li, M, and X contained in the solid electrolyte material relative to the total of the amount of substance of all elements that constitute the solid electrolyte material is greater than or equal to 90%. This molar ratio may be greater than or equal to 95%. The solid electrolyte material according to the first embodiment may solely consist of Li, M, and X.

In order to maintain the lithium ion conductivity at a higher retention rate even when the material is formed into fine particles, M may contain a trivalent metal element. When M contains a trivalent element, the solid electrolyte material according to the first embodiment can form a solid solution in a relatively wide composition region.

In order to maintain the lithium ion conductivity at a higher retention rate even when the material is formed into fine particles, M may contain a rare earth element.

In order to maintain the lithium ion conductivity at a higher retention rate even when the material is formed into fine particles, M may contain at least one element selected from the group consisting of Y (or yttrium) and Gd (or gadolinium).

In order to maintain the lithium ion conductivity at a higher retention rate even when the material is formed into fine particles, M may contain a group 2 element.

In order to maintain the lithium ion conductivity at a higher retention rate even when the material is formed into fine particles, M may contain Ca (or calcium).

In order to maintain the lithium ion conductivity at a higher retention rate even when the material is formed into fine particles, X may be at least one element selected from the group consisting of Cl and Br.

In order to maintain the lithium ion conductivity at a higher retention rate even when the material is formed into fine particles, X may be Cl and Br.

In order to maintain the lithium ion conductivity at a higher retention rate even when the material is formed into fine particles, the average ionic radius ratio may be greater than 0.424 and less than or equal to 0.460. The average ionic radius ratio may be greater than 0424 and less than or equal to 0.455. The average ionic radius ratio may be greater than 0424 and less than or equal to 0.450. The average ionic radius ratio may be greater than 0.424 and less than or equal to 0.442. The average ionic radius ratio may be greater than 0.426 and less than or equal to 0.442. The average ionic radius ratio may be greater than or equal to 0.427 and less than or equal to 0.442.

In order to maintain the lithium ion conductivity at a higher retention rate even when the material is formed into fine particles, the molar ratio Li/X of Li to X may be greater than or equal to 0.3 and less than or equal to 0.6. The molar ratio Li/X may be greater than or equal to 0.33 and less than or equal to 0.6. The molar ratio Li/X may be greater than or equal to 0.37 and less than or equal to 0.55.

The solid electrolyte material according to the first embodiment may contain amorphous phases.

The shape of the solid electrolyte material according to the first embodiment is not particularly limited. An example of the shape of the solid electrolyte material according to the first embodiment is acicular, spherical, oval, or fibrous. For example, the solid electrolyte material according to the first embodiment may be particles. The solid electrolyte material according to the first embodiment may be formed to have a pellet shape or a plate shape.

In order to further increase ion conductivity and form a good dispersion state with other materials such as active materials, for example, the solid electrolyte material according to the first embodiment may have a median diameter greater than or equal to 0.1 micrometers and less than equal to 100 micrometers when the solid electrolyte material according to the first embodiment has a particle shape (for example, a spherical shape). The median diameter may be greater than or equal to 0.5 micrometers and less than or equal to 10 micrometers. The median diameter refers to the particle diameter at which the cumulative volume in the volume-based particle size distribution is equal to 50%. The volume-based particle size distribution can be measured with a laser diffractometer or an image analyzer.

In order to form a good dispersion state between the solid electrolyte material and the active material, the solid electrolyte material according to the first embodiment may have a median diameter smaller than the active material when the solid electrolyte material has a particle shape (for example, a spherical shape).

The solid electrolyte material according to the first embodiment can be produced by the following method, for example.

Raw material powders that give the target composition blend ratio are prepared. The raw material powders may be, for example, halides. For example, when preparing $Li_3GdBr_2Cl_4$, LiBr, LiCl, and $GdCl_3$ are prepared at a 2.0:1.0:1.0 molar ratio. Raw material powders may be mixed at a molar ratio that has been adjusted in advance to cancel out the compositional changes that can occur during the process of synthesis.

The raw material powders are not limited to these described above. For example, the combination may be LiBr, LiCl, and $GdBr_3$. A complex anion compound such as $LiBr_{0.5}Cl_{0.5}$ may also be used as a raw material powder. A mixture of an oxygen-containing raw material powder (for example, an oxide, a hydroxide, a sulfate, or a nitrate) and a halide (for example, ammonium halide) may also be used.

The raw material powders are thoroughly mixed by using a mortar and a pestle, a ball mill, or a mixer to obtain a mixed powder. Subsequently, the mixed powder is heat-treated in vacuum or an inert atmosphere. Heat treatment may be performed, for example, in the range of a temperature higher than or equal to 100°C and lower than or equal to 650°C for 1 hour or longer.

As such, the solid electrolyte material according to the first embodiment is obtained.

(Second embodiment)

A second embodiment of the present disclosure will now be described. The matters described in the first embodiment can be omitted.

A battery according to the second embodiment is equipped with a positive electrode, a negative electrode, and an electrolyte layer. The electrolyte layer is disposed between the positive electrode and the negative electrode.

At least one selected from the group consisting of the positive electrode, the electrolyte layer, and the negative electrode contains the solid electrolyte material according to the first embodiment.

Since the battery according to the second embodiment contains the solid electrolyte material according to the first embodiment, the charge/discharge characteristics of the battery according to the second embodiment can be improved.

A specific example of the battery according to the second embodiment will now be described.

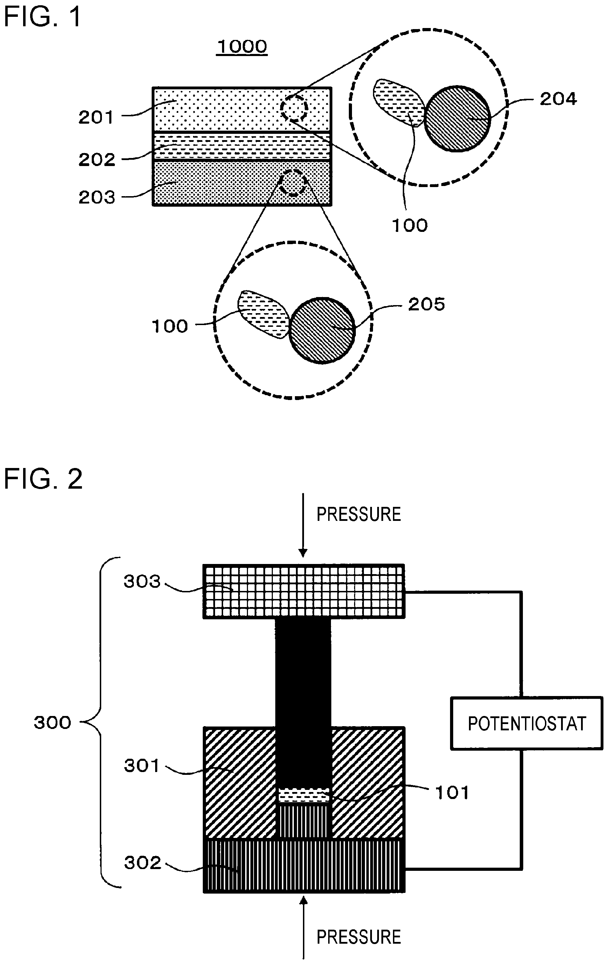

Fig. 1 is a cross-sectional view of a battery 1000 according to the second embodiment.

The battery 1000 is equipped with a positive electrode 201, an electrolyte layer 202, and a negative electrode 203.

The positive electrode 201 contains a positive electrode active material particle 204 and a solid electrolyte particle 100.

The electrolyte layer 202 is disposed between the positive electrode 201 and the negative electrode 203.

The electrolyte layer 202 contains an electrolyte material (for example, a solid electrolyte material).

The negative electrode 203 contains a negative electrode active material particle 205 and a solid electrolyte particle 100.

The solid electrolyte particle 100 is a particle composed of the solid electrolyte material according to the first embodiment or a particle that contains the solid electrolyte material according to the first embodiment as a main component. Here, a particle that contains the solid electrolyte material according to the first embodiment as a main component means a particle, the most abundant component of which is the solid electrolyte material according to the first embodiment.

(Positive electrode 201)

The positive electrode 201 contains a material that can occlude and release metal ions (for example, lithium ions). The positive electrode 201 contains, for example, a positive electrode active material (for example, the positive electrode active material particle 204).

An example of the positive electrode active material is a lithium-containing transition metal oxide, a transition metal fluoride, a polyanion material, a fluorinated polyanion material, a transition metal sulfide, a transition metal oxyfluoride, a transition metal oxysulfide, or a transition metal oxynitride. An example of the lithium-containing transition metal oxide is $Li(NiCoMn)O_2$, $Li(NiCoAl)O_2$, or $LiCoO_2$.

The positive electrode active material particle 204 may have a median diameter greater than or equal to 0.1 $\mu$m and less than or equal to 100 $\mu$m. When the positive electrode active material particle 204 has a median diameter greater than or equal to 0.1 $\mu$m, the positive electrode active material particles 204 and the solid electrolyte particles 100 can be satisfactorily dispersed in the positive electrode. In this manner, the charge/discharge characteristics of the battery are improved. When the positive electrode active material particle 204 has a median diameter less than or equal to 100 $\mu$m, the lithium diffusion speed in the positive electrode active material particle 204 is improved. As a result, the battery can operate at high output.

The positive electrode active material particle 204 may have a median diameter greater than the solid electrolyte particle 100. In this manner, the positive electrode active material particles 204 and the solid electrolyte particles 100 can be satisfactorily dispersed.

From the viewpoints of the battery energy density and output, in the positive electrode 201, the ratio of the volume Vca1 of the positive electrode active material particles 204 to the total of the volume Vca1 of the positive electrode active material particles 204 and the volume Vce1 of the solid electrolyte particles 100 may be greater than or equal to 0.30 and less than or equal to 0.95. That is, the (Vca1)/(Vca1 + Vce1) ratio may be greater than or equal to 0.30 and less than or equal to 0.95.

From the viewpoints of the battery energy density and output, the positive electrode 201 may have a thickness greater than or equal to 10 micrometers and less than or equal to 500 micrometers.

(Electrolyte layer 202)

The electrolyte layer 202 contains an electrolyte material. The electrolyte material is, for example, a solid electrolyte material. That is, the electrolyte layer 202 may be a solid electrolyte layer. The solid electrolyte material contained in the electrolyte layer 202 may contain the solid electrolyte material according to the first embodiment.

In order to improve the charge/discharge characteristics of the battery, the electrolyte layer 202 may contain the solid electrolyte material according to the first embodiment as a main component. In one example, in the electrolyte layer 202, the mass ratio of the solid electrolyte material according to the first embodiment to the entire electrolyte layer 202 may be greater than or equal to 50%.

This mass ratio may be greater than or equal to 70% in order to improve the charge/discharge characteristics of the battery.

The electrolyte layer 202 may contain not only the solid electrolyte material according to the first embodiment but also unavoidable impurities. The electrolyte layer 202 may contain, as an unreacted substance, a starting material of the solid electrolyte material. The electrolyte layer 202 may contain by-products that occur during synthesis of the solid electrolyte material. The electrolyte layer 202 may contain decomposition products that occur as a result of decomposition of the solid electrolyte material.

In order to improve the charge/discharge characteristics, this mass ratio may be 100% (excluding unavoidable impurities). In other words, the electrolyte layer 202 may be solely composed of the solid electrolyte material according to the first embodiment.

The electrolyte layer 202 may be solely composed of a solid electrolyte material that is different from the solid electrolyte material according to the first embodiment. As the solid electrolyte material different from the solid electrolyte material according to the first embodiment, for example, $Li_2MgX_4$, $Li_2FeX_4$, $Li(Al,Ga,In)X_4$, $Li_3(Al,Ga,In)X_6$, or LiI (here, X represents at least one element selected from the group consisting of F, Cl, Br, and I) can be used.

The electrolyte layer 202 may simultaneously contain the solid electrolyte material according to the first embodiment and a solid electrolyte material different from the solid electrolyte material according to the first embodiment. Here, the two materials may be evenly dispersed. A layer composed of the solid electrolyte material according to the first embodiment and a layer composed of a solid electrolyte material different from the solid electrolyte material according to the first embodiment may be placed sequentially with respect to the battery stacking direction.

The electrolyte layer 202 may have a thickness greater than or equal to 1 $\mu$m and less than or equal to 100 $\mu$m. When the electrolyte layer 202 has a thickness greater than or equal to 1 $\mu$m, short-circuiting rarely occurs between the positive electrode 201 and the negative electrode 203. When the electrolyte layer 202 has a thickness less than or equal to 100 $\mu$m, the battery can operate at high output.

(Negative electrode 203)

The negative electrode 203 contains a material that can occlude and release metal ions (for example, lithium ions). The negative electrode 203 contains, for example, a negative electrode active material (for example, the negative electrode active material particle 205).

An example of the negative electrode active material is a metal material, a carbon material, an oxide, a nitride, a tin compound, or a silicon compound. The metal material may be a single element metal or an alloy. An example of the metal material is lithium metal or a lithium alloy. An example of the carbon materials is natural graphite, coke, half-graphitized carbon, carbon fibers, spherical carbon, synthetic graphite, or amorphous carbon. From the viewpoint of capacity density, a preferable example of the negative electrode active material is silicon (Si), tin (Sn), a silicon compound, or a tin compound.

The negative electrode active material particle 205 may have a median diameter greater than or equal to 0.1 $\mu$m and less than or equal to 100 $\mu$m. When the negative electrode active material particle 205 has a median diameter greater than or equal to 0.1 $\mu$m, the negative electrode active material particles 205 and the solid electrolyte particles 100 can be satisfactorily dispersed in the negative electrode 203. In this manner, the charge/discharge characteristics of the battery are improved. When the negative electrode active material particle 205 has a median diameter less than or equal to 100 $\mu$m, the lithium diffusion speed in the negative electrode active material particle 205 is improved. As a result, the battery can operate at high output.

The negative electrode active material particle 205 may have a median diameter greater than the solid electrolyte particle 100. In this manner, the negative electrode active material particles 205 and the solid electrolyte particles 100 can be satisfactorily dispersed.

From the viewpoints of the battery energy density and output, in the negative electrode 203, the ratio of the volume vaa1 of the negative electrode active material particles 205 to the total of the volume vaa1 of the negative electrode active material particles 205 and the volume vae1 of the solid electrolyte particles 100 may be greater than or equal to 0.30 and less than or equal to 0.95. That is, the (vaa1/(vaa1 + vae1)) ratio may be greater than or equal to 0.30 and less than or equal to 0.95.

From the viewpoints of the battery energy density and output, the negative electrode 203 may have a thickness greater than or equal to 10 micrometers and less than or equal to 500 micrometers.

At least one selected from the group consisting of the positive electrode 201, the electrolyte layer 202, and the negative electrode 203 may contain a solid electrolyte material different from the solid electrolyte material according to the first embodiment for the purpose of improving ion conductivity, chemical stability, and electrochemical stability. An example of the solid electrolyte material different from the solid electrolyte material according to the first embodiment is a sulfide solid electrolyte material, an oxide solid electrolyte material, a halide solid electrolyte material, or an organic polymer solid electrolyte.

An example of the sulfide solid electrolyte material is $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, or $Li_{10}GeP_2S_{12}$.

An example of the oxide solid electrolyte material is

(i) a NASICON-type solid electrolyte such as $LiTi_2(PO_4)_3$ or an element-substituted form thereof,
(ii) a perovskite-type solid electrolyte based on $(LaLi)TiO_3$,
(iii) a LISICON-type solid electrolyte such as $Li_{14}ZnGe_4O_{16}$, $Li_4SiO_4$, $LiGeO_4$, or an element-substituted form thereof,
(iv) a garnet-type solid electrolyte such as $Li_7La_3Zr_2O_{12}$ or an element-substituted form thereof, or
(v) $Li_3PO_4$ and an N-substituted form thereof.

The halide solid electrolyte may be, for example, a compound represented by the chemical formula $LiaMe_bY_cX_6$ (where a + mb + 3c = 6 and c > 0 are satisfied, Me represents at least one selected from the group consisting of metal elements other than Li and Y and metalloids, and m represents the valence of Me. Me may be at least one selected from the group consisting of Mg, Ca, Sr, Ba, Zn, Sc, Al, Ga, Bi, Zr, Hf, Ti, Sn, Ta, and Nb.

An example of an organic polymer solid electrolyte is a compound between a polymer compound and a lithium salt. The polymer compound may have an ethylene oxide structure. The polymer compound having an ethylene oxide structure can contain more lithium salts, and thus can further increase ion conductivity.

An example of the lithium salts is $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, or $LiC(SO_2CF_3)_3$. One lithium salt selected from these may be used alone. Alternatively, a mixture of two or more lithium salts selected from these may also be used.

At least one selected from the group consisting of the positive electrode 201, the electrolyte layer 202, and the negative electrode 203 may contain a non-aqueous electrolyte liquid, a gel electrolyte, or an ionic liquid for the purpose of facilitating exchange of lithium ions and improving the output characteristics of the battery.

A non-aqueous electrolyte liquid contains a non-aqueous solvent and a lithium salt dissolved in the non-aqueous solvent.

An example of the non-aqueous solvent is a cyclic carbonate solvent, a linear carbonate solvent, a cyclic ether solvent, a linear ether solvent, a cyclic ester solvent, a linear ester solvent, or a fluorine solvent.

An example of the cyclic carbonate solvent is ethylene carbonate, propylene carbonate, or butylene carbonate.

An example of the linear carbonate solvent is dimethyl carbonate, ethyl methyl carbonate, or diethyl carbonate.

An example of the cyclic ether solvent is tetrahydrofuran, 1,4-dioxane, or 1,3-dioxolane.

An example of the linear ether solvent is 1,2-dimethoxyethane or 1,2-diethoxyethane.

An example of the cyclic ester solvent is $\gamma$-butyrolactone.

An example of the linear ester solvent is methyl acetate.

An example of the fluorine solvent is fluoroethylene carbonate, methyl fluoropropionate, fluorobenzene, fluoroethyl methyl carbonate, or fluorodimethylene carbonate.

One non-aqueous solvent selected from these may be used alone. Alternatively, a mixture of two or more non-aqueous solvents selected from these may also be used.

An example of the lithium salts is $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, or $LiC(SO_2CF_3)_3$.

One lithium salt selected from these may be used alone. Alternatively, a mixture of two or more lithium salts selected from these may also be used.

The lithium salt concentration may be, for example, greater than or equal to 0.5 mol/L and less than or equal to 2 mol/L.

A polymer material impregnated with a non-aqueous electrolyte liquid can be used as the gel electrolyte. An example of the polymer material is polyethylene oxide, polyacrylonitrile, polyvinylidene fluoride, polymethyl methacrylate, or a polymer having an ethylene oxide bond.

An example of the cation contained in the ionic liquid is

(i) an aliphatic linear quaternary salt such as tetraalkylammonium or tetraalkylphosphonium,
(ii) an aliphatic cyclic ammonium such as a pyrrolidinium, a morpholinium, an imidazolinium, a tetrahydropyrimidinium, a piperazinium, and a piperidinium, or
(iii) a nitrogen-containing heterocyclic aromatic cation such as a pyridinium or an imidazolium.

An example of the anion contained in the ionic liquid is $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, or $C(SO_2CF_3)_3^-$. The ionic liquid may contain a lithium salt.

At least one selected from the group consisting of the positive electrode 201, the electrolyte layer 202, and the negative electrode 203 may contain a binder for the purpose of improving adhesion between the particles.

An example of the binder is polyvinylidene fluoride, polytetrafluoroethylene, polyethylene, polypropylene, aramid resin, polyamide, polyimide, polyamideimide, polyacrylonitrile, polyacrylic acid, polymethyl acrylate, polyethyl acrylate, polyhexyl acrylate, polymethacrylic acid, polymethyl methacrylate, polyethyl methacryate, polyhexyl methacrylate, polyvinyl acetate, polyvinylpyrrolidone, polyether, polyether sulfone, hexafluoropolypropylene, styrene butadiene rubber, or carboxymethyl cellulose.

A copolymer can also be used as a binder. An example of such a binder is a copolymer of at least two materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene.

A mixture of two or more materials selected from the aforementioned materials may also be used as a binder.

At least one selected from the positive electrode 201 and the negative electrode 203 may contain a conductive aid for the purpose of increasing electronic conductivity.

An example of the conductive aid is

(i) a graphite such as natural graphite or synthetic graphite,
(ii) a carbon black such as acetylene black or Ketjen black,
(iii) conductive fibers such as carbon fibers or metal fibers,
(iv) fluorinated carbon,
(v) a metal powder such as aluminum,
(vi) conductive whiskers such as zinc oxide or potassium titanate,
(vii) a conductive metal oxide such as titanium oxide, or
(viii) a conductive polymer compound such as polyaniline, polypyrrole, or polythiophene.

To cut the cost, the aforementioned (i) or (ii) may be used as the conductive aid.

Regarding the shape of the battery according to the second embodiment, the battery is a coin-type battery, a cylindrical battery, a prismatic battery, a sheet-type battery, a button-type battery (in other words, a button-type cell), a flat battery, or a multilayer battery.

(Examples)

The present disclosure will now be described in further detail by referring to the examples below.

<Example 1>

[Preparation of solid electrolyte material]

In an argon atmosphere having a dew point lower than or equal to -60°C (hereinafter, referred to as a "dry argon atmosphere"), LiBr, LiCl, $CaBr_2$, and $YCl_3$ were prepared as raw material powders at a molar ratio of Li-Br:LiCl:$CaBr_2$:$YCl_3$ = 1.8:1.0:0.1:1.0. These material powders were crushed and mixed in a mortar to obtain a mixed powder. Next, the obtained mixed powder was heat-treated in an electric furnace for 3 hours at 500°C, and heat-treated product coarse particles were obtained as a result. Subsequently, the heat-treated product (in other words, the coarse particles) was divided into two groups. The coarse particles of one group were crushed by using a mortar and a pestle for 1 minute, and a powder of a solid electrolyte material according to Example 1A was obtained as a result. The rest of the coarse particles were crushed for 6 minutes, and a powder of a solid electrolyte material according to Example 1B was obtained as a result. In other words, the solid electrolyte material according to Example 1A was a solid electrolyte material before crushing, in other words, a solid electrolyte material that was not formed into fine particles. The solid electrolyte material according to Example 1B was a solid electrolyte material after crushing, in other words, a solid electrolyte material that was formed into fine particles.

[Evaluation of ion conductivity retention rate of solid electrolyte material after crushing]

Fig. 2 is a schematic view of a pressure forming die 300 used to evaluate the ion conductivity of a solid electrolyte material.
The pressure forming die 300 was equipped with a frame 301, a lower punch 302, and an upper punch 303. The frame 301 was formed of an insulating polycarbonate. Both the upper punch 303 and the lower punch 302 were formed of electron-conductive stainless steel.
The ion conductivity was measured by the following method using the pressure forming die 300 illustrated in Fig. 2.
In a dry atmosphere having a dew point lower than or equal to -30°C, the interior of the pressure forming die 300 was filled with a powder 101 of the solid electrolyte material according to Example 1. In the interior of the pressure forming die 300, a pressure of 400 MPa was applied to the solid electrolyte material according to Example 1 by using the lower punch 302 and the upper punch 303.
While the pressure was still applied, the impedance of the solid electrolyte material according to Example 1 was measured at room temperature (25 degrees Celsius $\pm$ 3 degrees Celsius) by an electrochemical impedance measurement method using a potentiostat (produced by Princeton Applied Research, trade name: "Versa STAT4") through the lower punch 302 and the upper punch 303.
The real value of the impedance at the measurement point at which the absolute value of the phase of the complex impedance was the smallest was deemed to be the resistance value against the ion conduction of the solid electrolyte material.
By using the resistance value of the solid electrolyte material, the ion conductivity was calculated on the basis of mathematical formula (2) below:

$$\sigma = (R_{SE} \times S/t)^{-1} \quad (2)$$

where

$\sigma$ is the ion conductivity,
S is a contact area of the solid electrolyte material with the upper punch 303 (in Fig. 2, this is equal to the cross-sectional area of the hollow portion of the frame 301),
$R_{SE}$ is a resistance value of the solid electrolyte material in the impedance measurement, and
t is the thickness of the solid electrolyte material to which the pressure was applied (in Fig. 2, this thickness is equal to the thickness of the layer formed of the solid electrolyte particles 100).

Not only the ion conductivity of the solid electrolyte material according to Example 1A (in other words, the solid electrolyte material that was not formed into fine particles) but also the ion conductivity of the solid electrolyte material according to Example 1B (in other words, the solid electrolyte material that was formed into fine particles) was measured. The quotient obtained by dividing the ion conductivity of the solid electrolyte material according to Example 1B by the ion conductivity of the solid electrolyte material according to Example 1A was indicated in percentage, and the resulting value was calculated as the "ion conductivity retention rate of the solid electrolyte material after crushing". The "ion conductivity retention rate of solid electrolyte material after crushing" of the solid electrolyte material according to Example 1 is indicated in Table 1.

[Analysis of crystal structure]

The crystal structure of the solid electrolyte material according to Example 1 was analyzed. In a dry atmosphere having a dew point lower than or equal to - 45°C, an X-ray diffraction pattern of the solid electrolyte material according to Example 1 was measured by using an X-ray diffractometer (MiniFlex600 produced by RIGAKU Corporation). Cu-K$\alpha$ radiation was used as the X-ray source. In other words, an X-ray diffraction pattern was measured by using Cu-K$\alpha$ radiation (wavelengths: 0.15405 nanometers and 0.15444 nanometers) by a $\theta$-$2\theta$ method. In the X-ray diffraction pattern of the solid electrolyte material according to Example 1, three or more diffraction peaks having high intensities were compared with the X-ray diffraction pattern listed in ICSD. For example, from a hexagonal crystal similar to $Li_3ErCl_6$, intense diffraction peaks are observed at four diffraction angles, that is, at about 15.3°, about 16.7°, about 30.5°, and about 39.6°. As mentioned above, when the crystal is different from $Li_3ErCl_6$, at least one of the diffraction angle of the diffraction peak or the intensity ratio of the diffraction peak can be different from that of $Li_3ErCl_6$. The crystal structure was determined to be the hexagonal crystal when the X-ray diffraction pattern was similar to that of $Li_3ErCl_6$ while considering the diffraction peaks at diffraction angles slightly different from the aforementioned diffraction angles as well as relatively weak peaks. The crystal structure of the solid electrolyte material according to Example 1 is indicated in Table 1.

In the X-ray diffraction pattern of the solid electrolyte material according to Example 1, when the half width of the peak having the highest intensity in a range of diffraction angles $2\theta$ greater than or equal to 25° and less than or equal to 35° was represented by FWHM, and the diffraction angle at the center of this peak was represented by $2\theta_p$, FWHM/$2\theta_p \leq 0.015$ was established.

[Molar ratio Li/X of Li to X]

For the solid electrolyte material according to Example 1, the molar ratio Li/X of Li to X was determined. The molar ratio Li/X was determined from the molar ratio of Li to X contained in the raw material powders. The molar ratio Li/X for the solid electrolyte material according to Example 1 is indicated in Table 1.

[Average ionic radius ratio]

The average ionic radius ratio of the solid electrolyte material according to Example 1 was calculated on the basis of the aforementioned formula.

The solid electrolyte material according to Example 1 contains Li, Ca, and Y as cations, and Cl and Br as anions. The ionic radii of Li, Ca, Y, Cl, and Br are, respectively, 0.76, 1.00, 0.90, 1.81, and 1.96. The amounts of substance of Li, Ca, Y, Cl, and Br are, respectively, 2.800, 0.100, 1.000, 4.000, and 2.000. Thus, the average ionic radius $r_C$ of the cations calculated by $(2.800 \times 0.76 + 0.100 \times 1.00 + 1.000 \times 0.90)/(2.800 + 0.100 + 1.000)$ was 0.8020. The average ionic radius $r_A$ of the anions calculated by $(4.000 \times 1.81 + 2.000 \times 1.96)/(4.000 + 2.000)$ was 1.860. Thus, the average ionic radius ratio calculated by $r_C/r_A$ was 0.431.

[Preparation of secondary battery]

In a dry argon atmosphere, the solid electrolyte material according to Example 1B and Li(Ni, Co, Mn)$O_2$ were prepared at a volume ratio of 50:50. These prepared materials were mixed in an agate mortar to obtain a positive electrode mixture. Li(Ni, Co, Mn)$O_2$ functioned as a positive electrode active material.

In an insulating barrel having an inner diameter of 9.5 millimeters, a sulfide solid electrolyte $Li_6PS_5Cl$ (60 mg), the solid electrolyte material according to Example 1B (20 mg, which was equivalent to a thickness of 700 $\mu$m), and a positive electrode mixture (9.6 mg) were sequentially layered to obtain a multilayer body. A pressure of 720 MPa was applied to the multilayer body so as to form a first electrode and a solid electrolyte layer.

Next, metallic InLi was layered on the solid electrolyte layer. To the resulting multilayer body, a pressure of 80 MPa was applied to form a second electrode. The second electrode after application of the pressure had a thickness of 600 micrometers. As such, a multilayer body constituted by the first electrode, the solid electrolyte layer, and the second electrode was prepared. The first electrode was a positive electrode, and the second electrode was a negative electrode.

Current collectors formed of stainless steel were attached to the first electrode and the second electrode, and current collecting leads were attached to the current collectors. Lastly, the interior of the insulating barrel was blocked from the ambient atmosphere by using an insulating ferrule so as to hermetically seal the interior of the insulating barrel.

As such, a secondary battery according to Example 1 was prepared.

[Charge/discharge test]

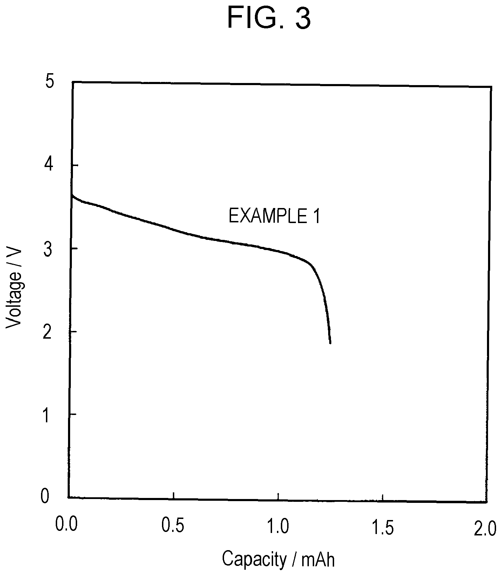

Fig. 3 is a graph illustrating an initial discharge characteristic of a secondary battery according to Example 1.

The initial discharge characteristic illustrated in Fig. 3 was measured by the following method.

The secondary battery according to Example 1 was placed in a 25°C constant temperature chamber. The battery was charged until the voltage reached 3.7 V at a current density of $0.1 \text{ mA/cm}^2$. Next, the battery was discharged until the voltage reached 1.9 V at a current density of $0.1 \text{ mA/cm}^2$. This current density is equivalent to 0.05 C rate.

As a result of the aforementioned measurement, the secondary battery according to Example 1 had an initial discharge capacity of 1.2 mAh.

<Example 2>

[Preparation of solid electrolyte material]

LiBr, LiCl, $CaBr_2$, and $YCl_3$ were prepared as raw material powders at a molar ratio of LiBr:LiCl:$CaBr_2$:$YCl_3$ = 1.7:1.0:0.$\overline{15:1.0}$.

Except for the raw materials above, a solid electrolyte material according to Example 2A (in other words, a solid electrolyte material before crushing) and a solid electrolyte material according to Example 2B (in other words, a solid electrolyte material after crushing) were obtained as in Example 1.

[Evaluation of ion conductivity retention rate of solid electrolyte material after crushing]

The ion conductivity retention rate of the solid electrolyte material after crushing according to Example 2 was measured as in Example 1.

The "ion conductivity retention rate of the solid electrolyte material after crushing" in Example 2 is indicated in Table 1.

[Analysis of crystal structure]

The crystal structure of the solid electrolyte material according to Example 2 was analyzed as in Example 1. The crystal structure of the solid electrolyte material according to Example 2 is indicated in Table 1.

[Molar ratio Li/X of Li to X]

In Example 2 also, the molar ratio Li/X of Li to X was determined as in Example 1. The molar ratio Li/X of the solid electrolyte material according to Example 2 is indicated in Table 1.

[Average ionic radius ratio]

In Example 2 also, the average ionic radius ratio was calculated as in Example 1. The calculated value is indicated in Table 1.

<Example 3>

LiBr, LiCl, $CaBr_2$, and $YCl_3$ were prepared as raw material powders at a molar ratio of LiBr:$CaBr_2$:$YCl_3$ = 2.2:0.4:1.$\overline{0}$.

Except for the raw materials above, a solid electrolyte material according to Example 3A (in other words, a solid electrolyte material before crushing) and a solid electrolyte material according to Example 3B (in other words, a solid electrolyte material after crushing) were obtained as in Example 1.

[Evaluation of ion conductivity retention rate of solid electrolyte material after crushing]

The ion conductivity retention rate of the solid electrolyte material after crushing according to Example 3 was measured as in Example 1.

The "ion conductivity retention rate of the solid electrolyte material after crushing" in Example 3 is indicated in Table 1.

[Analysis of crystal structure]

The crystal structure of the solid electrolyte material according to Example 3 was analyzed as in Example 1. The crystal structure of the solid electrolyte material according to Example 3 is indicated in Table 1.

[Molar ratio Li/X of Li to X]

In Example 3 also, the molar ratio Li/X of Li to X was determined as in Example 1. The molar ratio Li/X of the solid electrolyte material according to Example 3 is indicated in Table 1.

[Average ionic radius ratio]

In Example 3 also, the average ionic radius ratio was calculated as in Example 1. The calculated value is indicated in Table 1.

<Example 4>

LiBr, LiCl, $GdCl_3$, and $YCl_3$ were prepared as raw material powders at a molar ratio of LiBr:LiCl:$GdCl_3$:$YCl_3$ = 2.0:1.0:0.5:0.5.
Except for the raw materials above, a solid electrolyte material according to Example 4A (in other words, a solid electrolyte material before crushing) and a solid electrolyte material according to Example 4B (in other words, a solid electrolyte material after crushing) were obtained as in Example 1.
[Evaluation of ion conductivity retention rate of solid electrolyte material after crushing]
The ion conductivity retention rate of the solid electrolyte material after crushing according to Example 4 was measured as in Example 1.
The "ion conductivity retention rate of the solid electrolyte material after crushing" in Example 4 is indicated in Table 1.

[Analysis of crystal structure]

The crystal structure of the solid electrolyte material according to Example 4 was analyzed as in Example 1. The crystal structure of the solid electrolyte material according to Example 4 is indicated in Table 1.

[Molar ratio Li/X of Li to X]

In Example 4 also, the molar ratio Li/X of Li to X was determined as in Example 1. The molar ratio Li/X of the solid electrolyte material according to Example 4 is indicated in Table 1.

[Average ionic radius ratio]

In Example 4 also, the average ionic radius ratio was calculated as in Example 1. The calculated value is indicated in Table 1.

<Example 5>

LiBr, LiCl, $GdCl_3$, and $YCl_3$ were prepared as raw material powders at a molar ratio of LiBr:LiCl:$GdCl_3$:$YCl_3$ = 2.0:1.0:0.9:0.1.
Except for the raw materials above, a solid electrolyte material according to Example 5A (in other words, a solid electrolyte material before crushing) and a solid electrolyte material according to Example 5B (in other words, a solid electrolyte material after crushing) were obtained as in Example 1.

[Evaluation of ion conductivity retention rate of solid electrolyte material after crushing]

The ion conductivity retention rate of the solid electrolyte material after crushing according to Example 5 was measured as in Example 1.

The "ion conductivity retention rate of the solid electrolyte material after crushing" in Example 5 is indicated in Table 1.

[Analysis of crystal structure]

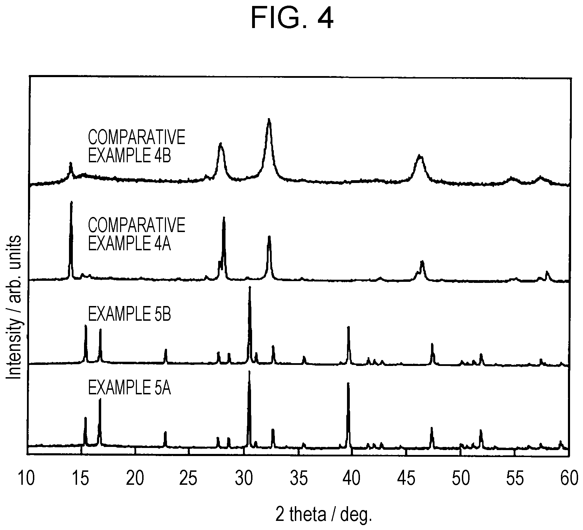

The crystal structure of the solid electrolyte material according to Example 5 was analyzed as in Example 1. The crystal structure of the solid electrolyte material according to Example 5 is indicated in Table 1. The X-ray diffraction patterns of the solid electrolyte materials according to Examples 5A and 5B are indicated in Fig. 4.

[Molar ratio Li/X of Li to X]

In Example 5 also, the molar ratio Li/X of Li to X was determined as in Example 1. The molar ratio Li/X of the solid electrolyte material according to Example 5 is indicated in Table 1.

[Average ionic radius ratio]

In Example 5 also, the average ionic radius ratio was calculated as in Example 1. The calculated value is indicated in Table 1.

<Example 6>

LiBr, LiCl, and $GdCl_3$ were prepared as raw material powders at a molar ratio of $LiBr:LiCl:GdCl_3$ = 2.0:1.0:1.0.
Except for the raw materials above, a solid electrolyte material according to Example 6A (in other words, a solid electrolyte material before crushing) and a solid electrolyte material according to Example 6B (in other words, a solid electrolyte material after crushing) were obtained as in Example 1.

[Evaluation of ion conductivity retention rate of solid electrolyte material after crushing]

The ion conductivity retention rate of the solid electrolyte material after crushing according to Example 6 was measured as in Example 1.
The "ion conductivity retention rate of the solid electrolyte material after crushing" in Example 6 is indicated in Table 1.

[Analysis of crystal structure]

The crystal structure of the solid electrolyte material according to Example 6 was analyzed as in Example 1. The crystal structure of the solid electrolyte material according to Example 6 is indicated in Table 1.

[Molar ratio Li/X of Li to X]

In Example 6 also, the molar ratio Li/X of Li to X was determined as in Example 1. The molar ratio Li/X for the solid electrolyte material according to Example 6 is indicated in Table 1.

[Average ionic radius ratio]

In Example 6 also, the average ionic radius ratio was calculated as in Example 1. The calculated value is indicated in Table 1.

<Comparative Example 1>

LiBr and $YCl_3$ were prepared as raw material powders at a molar ratio of $LiBr:YCl_3$ = 3.0:1.0.
Except for the raw materials above, a solid electrolyte material according to Comparative Example 1A (in other words, a solid electrolyte material before crushing) and a solid electrolyte material according to Comparative Example 1B (in other words, a solid electrolyte material after crushing) were obtained as in Example 1.

[Evaluation of ion conductivity retention rate of solid electrolyte material after crushing]

The ion conductivity retention rate of the solid electrolyte material after crushing according to Comparative Example 1 was measured as in Example 1.

The "ion conductivity retention rate of the solid electrolyte material after crushing" in Comparative Example 1 is indicated in Table 1.

[Analysis of crystal structure]

The crystal structure of the solid electrolyte material according to Comparative Example 1 was analyzed as in Example 1. The crystal structure of the solid electrolyte material according to Comparative Example 1 is indicated in Table 1.

[Molar ratio Li/X of Li to X]

In Comparative Example 1 also, the molar ratio Li/X of Li to X was determined as in Example 1. The molar ratio Li/X for the solid electrolyte material according to Comparative Example 1 is indicated in Table 1.

[Average ionic radius ratio]

In Comparative Example 1 also, the average ionic radius ratio was calculated as in Example 1. The calculated value is indicated in Table 1.

<Comparative Example 2>

LiBr, $CaBr_2$, and $YCl_3$ were prepared as raw material powders at a molar ratio of $LiBr:CaBr_2:YCl_3 = 2.9:0.05:1.0$.

Except for the raw materials above, a solid electrolyte material according to Comparative Example 2A (in other words, a solid electrolyte material before crushing) and a solid electrolyte material according to Comparative Example 2B (in other words, a solid electrolyte material after crushing) were obtained as in Example 1.

[Evaluation of ion conductivity retention rate of solid electrolyte material after crushing]

The ion conductivity retention rate of the solid electrolyte material after crushing according to Comparative Example 2 was measured as in Example 1.

The "ion conductivity retention rate of the solid electrolyte material after crushing" in Comparative Example 2 is indicated in Table 1.

[Analysis of crystal structure]

The crystal structure of the solid electrolyte material according to Comparative Example 2 was analyzed as in Example 1. The crystal structure of the solid electrolyte material according to Comparative Example 2 is indicated in Table 1.

[Molar ratio Li/X of Li to X]

In Comparative Example 2 also, the molar ratio Li/X of Li to X was determined as in Example 1. The molar ratio Li/X for the solid electrolyte material according to Comparative Example 2 is indicated in Table 1.

[Average ionic radius ratio]

In Comparative Example 2 also, the average ionic radius ratio was calculated as in Example 1. The calculated value is indicated in Table 1.

<Comparative Example 3>

LiBr, $GdCl_3$, and $GdBr_3$ were prepared as raw material powders at a molar ratio of $LiBr:GdCl_3:GdBr_3 = 3.0:0.667:0.333$.

Except for the raw materials above, a solid electrolyte material according to Comparative Example 3A (in other words, a solid electrolyte material before crushing) and a solid electrolyte material according to Comparative Example 3B (in other words, a solid electrolyte material after crushing) were obtained as in Example 1.

[Evaluation of ion conductivity retention rate of solid electrolyte material after crushing]

The ion conductivity retention rate of the solid electrolyte material after crushing according to Comparative Example 3 was measured as in Example 1.
The "ion conductivity retention rate of the solid electrolyte material after crushing" in Comparative Example 3 is indicated in Table 1.

[Analysis of crystal structure]

The crystal structure of the solid electrolyte material according to Comparative Example 3 was analyzed as in Example 1. The crystal structure of the solid electrolyte material according to Comparative Example 3 is indicated in Table 1.

[Molar ratio Li/X of Li to X]

In Comparative Example 3 also, the molar ratio Li/X of Li to X was determined as in Example 1. The molar ratio Li/X of the solid electrolyte material according to Comparative Example 3 is indicated in Table 1.

[Average ionic radius ratio]

In Comparative Example 3 also, the average ionic radius ratio was calculated as in Example 1. The calculated value is indicated in Table 1.

<Comparative Example 4>

LiBr, $GdCl_3$, $GdBr_3$, and $YCl_3$ were prepared as raw material powders at a molar ratio of $LiBr:GdCl_3:GdBr_3:YCl_3$ = 3:0.567:0.333:0.1.
Except for the raw materials above, a solid electrolyte material according to Comparative Example 4A (in other words, a solid electrolyte material before crushing) and a solid electrolyte material according to Comparative Example 4B (in other words, a solid electrolyte material after crushing) were obtained as in Example 1.

[Evaluation of ion conductivity retention rate of solid electrolyte material after crushing]

The ion conductivity retention rate of the solid electrolyte material after crushing according to Comparative Example 4 was measured as in Example 1.
The "ion conductivity retention rate of the solid electrolyte material after crushing" in Comparative Example 4 is indicated in Table 1.

[Analysis of crystal structure]

The crystal structure of the solid electrolyte material according to Comparative Example 4 was analyzed as in Example 1. The crystal structure of the solid electrolyte material according to Comparative Example 4 is indicated in Table 1. The X-ray diffraction patterns of the solid electrolyte materials according to Comparative Examples 4A and 4B are indicated in Fig. 4.

[Molar ratio Li/X of Li to X]

In Comparative Example 4 also, the molar ratio Li/X of Li to X was determined as in Example 1. The molar ratio Li/X for the solid electrolyte material according to Comparative Example 4 is indicated in Table 1.

[Average ionic radius ratio]

In Comparative Example 4 also, the average ionic radius ratio was calculated as in Example 1. The calculated value is indicated in Table 1.

[Table 1]

| | Crystal structure | Constituent elements | Li/X | Average ionic radius ratio | Ion conductivity retention rate (%) |
|---|---|---|---|---|---|
| Example 1 | Hexagonal | Li, Ca, Y, Br, Cl | 0.47 | 0.431 | 59 |
| Example 2 | Hexagonal | Li, Ca, Y, Br, Cl | 0.45 | 0.433 | 64 |
| Example 3 | Hexagonal | Li, Ca, Y, Br, Cl | 0.37 | 0.438 | 107 |
| Example 4 | Hexagonal + Monoclinic | Li, Y, Gd, Br, Cl | 0.50 | 0.430 | 56 |
| Example 5 | Hexagonal | Li, Y, Gd, Br, Cl | 0.50 | 0.432 | 48 |
| Example 6 | Hexagonal | Li, Gd, Br, Cl | 0.50 | 0.433 | 54 |
| Com parative Example 1 | Monoclinic | Li, Y, Br, Cl | 0.50 | 0.422 | 34 |
| Com parative Example 2 | Monoclinic | Li, Ca, Y, Br, Cl | 0.48 | 0.424 | 37 |
| Com parative Example 3 | Monoclinic | Li, Gd, Br, Cl | 0.50 | 0.421 | 29 |
| Com parative Example 4 | Monoclinic | Li, Y, Gd, Br, Cl | 0.50 | 0.421 | 23 |

As is clear from the comparison between the solid electrolyte materials according to Examples 1 to 6 and the solid electrolyte materials according to Comparative Examples 1 to 4, when a solid electrolyte material composed of Li, M, and X (here, M is at least one element selected from the group consisting of metal elements other than Li and metalloids, and X is at least one element selected from the group consisting of F, Cl, Br, and I) contains a crystal phase assigned to hexagonal crystals, this solid electrolyte material has a good ion conductivity retention rate even when formed into fine particles.

Since the ion conductivity retention rate is excellent, when the solid electrolyte material is formed into fine particles such as by crushing, the ion conductivity of the solid electrolyte material containing a hexagonal crystal is less likely to decrease than the ion conductivity of the solid electrolyte material solely composed of monoclinic crystals.

When the X-ray diffraction measurement was conducted by using Cu-Kα radiation, the crystallinity of the monoclinic crystal solid electrolyte material crushed for 6 minutes was notably lower than the single crystal solid electrolyte material crushed for 1 minute. Meanwhile, the decrease in crystallinity caused by crushing was little in a solid electrolyte material containing hexagonal crystals. It is considered that the change in crystal structure caused by crushing the crystal phases assigned to hexagonal crystals is smaller than in single crystals, and thus the ion conductivity retention rate of the solid electrolyte material containing a crystal phase assigned to hexagonal crystals is excellent even after being formed into fine particles such as by crushing.

The results of the studies conducted by the present inventors revealed that the average ionic radius ratio was involved in the determination of the crystal structure. As indicated in Table 1, when the value of the average ionic radius ratio is greater than 0.424, crystal phases assigned to hexagonal crystals deposit.

As is clear from Table 1, as long as the molar ratio Li/X is greater than or equal to 0.37 and less than or equal to 0.50, excellent ion conductivity is obtained.

Since the solid electrolyte materials according to Examples 1 to 6 do not contain sulfur, hydrogen sulfide does not occur.

Industrial Applicability

A battery of the present disclosure can be used as, for example, an all-solid lithium ion secondary battery.

Reference Signs List

| | |
|---|---|
| 100 | solid electrolyte particle |
| 101 | solid electrolyte material powder |
| 201 | positive electrode |
| 202 | electrolyte layer |
| 203 | negative electrode |
| 204 | positive electrode active material particle |
| 205 | negative electrode active material particle |
| 300 | pressure forming die |
| 301 | frame |
| 302 | lower punch |
| 303 | upper punch |
| 1000 | battery |

**Claims**

1. A solid electrolyte material comprising:

   Li, M, and X,
   wherein M is at least one element selected from the group consisting of metal elements other than Li and metalloids,
   X is at least one element selected from the group consisting of F, Cl, Br, and I,
   mathematical formula (I) below is satisfied:

$$FWHM/2\theta_p \leq 0.015 \quad (I)$$

   wherein,

   FWHM represents a half width of an X-ray diffraction peak in an X-ray diffraction pattern obtained by performing X-ray diffraction measurement on the solid electrolyte material by using Cu-K$\alpha$ radiation, the X-ray diffraction peak having the highest intensity within a range of diffraction angles $2\theta$ greater than or equal to 25° and less than or equal to 35°, and
   $2\theta_p$ represents a diffraction angle at a center of the X-ray diffraction peak,

   a value obtained by dividing an average ionic radius of Li and M by an average ionic radius of X is greater than 0.424, and
   the solid electrolyte material contains a crystal phase assigned to hexagonal crystals.

2. The solid electrolyte material according to Claim 1, wherein:
   M contains a trivalent metal element.

3. The solid electrolyte material according to Claim 1 or 2, wherein:
   M contains a rare earth element.

4. The solid electrolyte material according to any one of Claims 1 to 3, wherein:
   M contains at least one element selected from the group consisting of Y and Gd.

5. The solid electrolyte material according to any one of Claims 1 to 4, wherein:
   M contains a group 2 element.

6. The solid electrolyte material according to Claim 5, wherein:
   the group 2 element is Ca.

**7.** The solid electrolyte material according to any one of Claims 1 to 6, wherein:
X is at least one element selected from the group consisting of Cl and Br.

**8.** The solid electrolyte material according to Claim 7, wherein:
X is Cl and Br.

**9.** The solid electrolyte material according to any one of Claims 1 to 8, wherein:
a molar ratio Li/X of Li to X is greater than or equal to 0.3 and less than or equal to 0.6.

**10.** A battery comprising:

a positive electrode;
a negative electrode; and
an electrolyte layer disposed between the positive electrode and the negative electrode,
wherein at least one selected from the group consisting of the positive electrode, the negative electrode, and the electrolyte layer contains the solid electrolyte material according to any one of Claims 1 to 9.

FIG. 1

FIG. 2

# FIG. 3

# FIG. 4

**EP 3 905 276 A1**

## INTERNATIONAL SEARCH REPORT

| International application No. |
|---|
| PCT/JP2019/035795 |

A. CLASSIFICATION OF SUBJECT MATTER
Int. Cl. H01B1/06(2006.01)i, H01B1/08(2006.01)i, H01B13/00(2006.01)i,
H01M4/62(2006.01)i, H01M10/0562(2010.01)i

According to International Patent Classification (IPC) or to both national classification and IPC

B. FIELDS SEARCHED

Minimum documentation searched (classification system followed by classification symbols)
Int. Cl. H01B1/06, H01B1/08, H01B13/00, H01M4/62, H01M10/0562

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2018/025582 A1 (PANASONIC INTELLECTUAL PROPERTY MANAGEMENT CO., LTD.) 08 February 2018, claims & US 2019/0088995 A1, claims & EP 3496202 A1 & CN 108701860 A | 1-10 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12.11.2019 | 26.11.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2011129312 A

**Non-patent literature cited in the description**

• **SHANNON et al.** *Acta,* 1976, vol. A32, 751